# EUROPEAN PATENT APPLICATION

(11) **EP 1 649 737 A1**
(43) Date of publication of application: **26.04.2006**
(21) Application number: 05447234.5
(22) Date of filing: 17.10.2005
(51) Int. Cl.: A01C 11/02

(54) **Continuous feed-through cutting planting machine**

(30) Priority: 19.10.2004 BE 200400513
(71) Applicant: Van Redts, Jan, 2520 Ranst (BE)
(72) Inventor: Van Redts, Jan, 2520 Ranst (BE)
(74) Representative: Hoorweg, Petrus Nicolaas

(57) **Abstract**

Continuous feed-through cutting planting machine consisting of a frame on which all necessary components are assembled, a supply magazine; a number of buffer conveyors by which plants are transported to the machine operator; a number of rotatingly positioned cascades, each of them consisting of a carrier on which a number of containers have been placed, each of them fitted at the bottom with a closing device; a number of hingedly positioned vertical transport mechanisms to transport the cuttings up to into the planting hole; a number of planers adjustable in height planing the underlying ground at the correct height before the planting holes are made; a proportional number of hingedly positioned cylinders, each of them fitted with a punch with the desired form to make the planting holes.

## Description

This invention relates to a continuous feed-through cutting planting machine for planting cuttings.

The purpose of this invention is to improve the mechanical cutting planting methods, making use of technical reliable means to transport the plants from a supply magazine in an unbranched way to the their respective planting holes.

In addition to the above described purpose, the totality of the improving characteristics of this invention aims at a significant increase of the working capacity.

In order to achieve the above described objects by which this invention is characterized, this machine mainly consists of a number of wheel sets. Each of such wheel sets has at least two wheels the one placed behind the other at a sufficient distance in the direction of travel, and third hinge point situated between the two pivots of the wheels; a frame on which all necessary components are assembled, a supply magazine from which the cuttings to be planted are drawn; a number of buffer conveyors by which cuttings are transported to the machine operator; a proportional number of rotatingly positioned cascades, each of them consisting of a carrier on which a number of containers have been vertically placed; at their bottom each of those containers has a closing device; a proportional number of hingedly positioned vertical transport mechanisms, each of them fitted with a number of pulleys placed across each other on which grab conveyors travel; a proportional number of planers adjustable in height planing the underlying ground at the correct height before the planting holes are made; a proportional number of hingedly positioned cylinders, each of them of having a punch with the desired form to make the planting holes.

As far as the existing cutting planting machines are concerned, the cuttings have to be taken out of a supply box or magazine by the machine operator with one of both hands, after which each cutting is passed each time to the other hand in order to be positioned one by one in the feed-through mechanism. In addition, as far as some machines are concerned, the movement of the feed-through mechanism in which the cuttings have to be positioned, is branched, as a result of which the positioning requires much concentration and high skilfulness from the machine operator. As far as some machines are concerned, the whole part of the machine occupied by the machine operators is moved in a branched way over the field to be tilled. The accelerations resulting therefrom make the positioning of the cuttings even more difficult. The reason of this branched movement of the whole feed-through mechanism is to be found in the necessity to have the whole feed-through mechanism of the cuttings stopped each time at the correct position above the planting hole, to make the cutting end up vertically in the planting hole. As far as the existing machines are concerned, the mechanism for making the planting holes consists of a construction which can be moved over the frame to and fro, which makes a branched movement in relation to the field to be tilled in order to make a series of holes in the field to be tilled at previously determined intermediate distances by driving a number of punches vertically into the ground and draw them back. Existing cutting planting machines, preventing this branched movement of significant parts of the planting device by making the planting hole maker and the transport mechanism somewhat swing to and fro in the direction of travel of the planting device before the cuttings are put into the planting hole, have a complicated mechanism in order to obtain a synchronisation between the movements of planting hole maker, the transport mechanism to put the cuttings into the planting holes and the field to be tilled, which moves under the planting device. Still other machines make the planting holes by means of a cogwheel or chain which have a number of punches or a complex transport mechanism which brings the cuttings right above the planting holes to drop them there into the planting holes, or transport the cuttings up to a previously made groove which is filled up when the transport elements are lifted, while the transport mechanism leaves the cutting in the filled up groove. The existing cutting planting machines are moved across the filed to be tilled by the frame which has a number of wheels whose axis takes a fixed position in relation to the frame or which may move somewhat in height in relation to the frame in the most favourable case to absorb unevennesses in the field. In the latter case the upward pressure of the spring system on the frame will change when travelling over unevennesses in the field. As a result of both fixed and springy suspensions, the depth of the planting holes is irregular, unverifiable and often unreliable.

As far as the construction form referred to at the beginning of the invention of the feed-through cutting planting machine is concerned, the cuttings are transported in a number of consecutive stages from the supply magazine up to into a planting hole in the planting ground. In a first stage the cuttings are taken out of their supply magazine by an operator and partly put over the edge of the buffer conveyor inclining on the buffer conveyor at sufficiently large intermediate distances. This buffer conveyor runs over a number of horizontally mounted rollers up to under the second conveyor whose bottom side runs in the transport direction of the cuttings, and because of the fact that the second conveyor is positioned sufficiently high in relation to the buffer conveyor, it functions as a clamp conveyor in order to transport the cuttings clamped between the buffer conveyor and the clamp conveyor. The buffer conveyor and the clamp conveyor are led from a horizontal position to a set of vertically mounted rollers, as a result of which the cuttings clamped between the buffer conveyor and the clamp conveyor will hang vertically with their part inclining over the edge of the buffer conveyor pointing downwards. The buffer conveyor transports the cuttings up to above a continuously rotating cascade, which has a number of vertically mounted containers and each of those containers is closed at the bottom by a horizontally swivelling closing device. In a second stage of the planting cycle a second series of operators pulls each time one cutting with one hand loose from its clamped position and lowers it into one of the vertical containers until it reaches the closing device under the containers. The supply of the cuttings during the first stage of the planting cycle is controlled by each one of the second series of operators independently by changing the speed of the respective buffer conveyor and clamp conveyor. This operation separates the first and second stages. While in the second stage of the planting cycle, the cascade keeps on operating in a continuous movement, the third stage of the planting cycle is started by activating a vertically hung up cilinder hinging in a vertical surface parallel to the direction of movement, at a specific moment. By doing so a punch is moved downwards under an adjustable angle up to the desired depth in the planting ground. The punch pushes away the ground as result of which a planting hole is made. During this operation, the forward movement of the frame over the planting ground to be tilled leads to a backward movement of the planting ground with the punch set in the planting ground in relation to the hinge point of the cylinder which hinges in such backward direction freely around its suspension hinge point so that it follows the movement of the planting hole in relation to the frame. When the planting hole has been made, the cylinder lifts the punch and the cylinder is pushed back by means of a damped spring system, as a result of which the cylinder is swung around its suspension hinge point up to against a stop, and settles in the starting position for a following cycle and the third stage of the planting cycle is ended. As a result, the longitudinal position of the planting hole in relation to the planting ground is determined exclusively by the moment at which the punch is moved into the planting ground. In order to limit the variations of the depths of the consecutive planting holes as a result of the vertical movements of the frame caused by evenenesses in the field as much as possible, at least one support of the frame is placed on the hinge point between the wheels of a wheel set which will cause this wheel set to function as a boogie and which will considerably reduce the vertical movements of the support of the frame caused by unevenesses in the travel track. While the second stage advances and the third stage expires, one container fitted with a closing device passes above the transport mechanism which will carry out the fourth stage of in the planting cycle. Each of the above closing devices is hingedly positioned under its respective container in a horizontal surface, so that it can swing away under its container, and it is also forced by a spring into this turned away position. The rotating cascade with containers and closing devices is enclosed near the closing devices by a stationary ring, which forces the closing devices under their respective containers against the resilience of the aforesaid spring. This ring is opened out at the position where the containers pass above the vertical transport mechanism, as a result of which each time one closing device is turned outwards by its respective spring under the container and the bottom of the container concerned is opened. As a result of the movement of the closing device, the bottom side of the cutting which rests on the closing device in the swing direction of the closing device, is pushed against the side wall of the container concerned, as a result of which in this stage of its respective planting cycle each cutting leaves in freefall from an identical spatial position in relation to the whole planting device. Each time a container is opened, a fourth stage of the whole planting cycle is started, whereby the cutting is caught and transported downwards by the vertical transport mechanism which is hingedly hung up in the vertical surface of the direction of movement, after as small a freefall as possible. This downward movement is combined with a swinging movement of the whole hingedly hung up transport mechanism. This swing movement is taken care of by a central driving shaft fitted with an eccentric for each transport mechanism, of which the eccentric movement is transmitted by means of a follower or connecting rod to the respective hingedly hung up vertical transport mechanism. The position of the eccentric and the hinge points of the transport mechanism and the crank or follower is chosen in such a way that the backward movement of transport mechanism takes place in such a way that its axis points to one fixed point on the planting ground during the whole movement that is necessary to transport the cutting up to into the planting hole and to cause the cutting to leave the transport mechanism completely to complete the fourth stage of the planting cycle and the planting cycle in its totality. While the central axle keeps on turning the vertical transport mechanism returns to its first position, ready for the next cycle.

Other advantages of this invention will be shown by the following description of the continuous feed-through cutting planting machine.

The drawings show the application of the continuous feed-through cutting planting machine as referred to at the beginning of the invention. The cuttings are transported in a number of consecutive stages from a supply magazing up to into a planting hole in the planting ground.

In a first stage the cuttings 1 are taken out of their supply magazine 2 by an operator and partly put over the edge of the buffer conveyor inclining on the buffer conveyor 3 at sufficiently large intermediate distances. This buffer conveyor 3 runs over a number of horizontally mounted rollers 4 up to under the second conveyor 5 whose bottom side runs in the transport direction of the cuttings 1, and because of the fact that the second conveyor is positioned sufficiently high in relation to the buffer conveyor 3, it functions as a clamp conveyor 5 in order to transport the cuttings 1 clamped between the buffer conveyor 3 and the clamp conveyor 5. The buffer conveyor 3 and the clamp conveyor 5 are led from a horizontal position to a set of vertically mounted rollers 6, as a result of which the cuttings 1 clamped between the buffer conveyor 3 and the clamp conveyor 5 will hang vertically with their part inclining over the edge of the buffer conveyor 3 pointing downwards. The buffer conveyor 3 transports the cuttings 1 up to above a continuously rotating cascade 7, which has a number of vertically mounted containers 8 and each of those containers is closed at the bottom by a horizontally swivelling closing device 9. In a second stage of the planting cycle a second series of operators pulls each time one cutting 1 with one hand loose from its clamped position and lowers it into one of the vertical containers 8 until it reaches the closing device 9 under the container 8. The supply of the cuttings during the first stage of the planting cycle is controlled by each one of the second series of operators independently by changing the speed of the respective buffer conveyor 3 and clamp conveyor 5. This operation separates the first and second stages. While in the second stage of the planting cycle, the cascade keeps on operating in a continuous movement, the third stage of the planting cycle is started by activating a vertically hung up cylinder, hinging in a vertical surface parallel to the direction of movement, at a specific moment. By doing so a punch 11 is moved downwards under an adjustable angle up to the desired depth in the planting ground 12. The punch 11 pushes away the ground as result of which a planting hole 12' is made. During this operation, the forward movement of the frame 14 over the planting ground to be tilled 12 leads to a backward movement of the planting ground 12 with the punch 11 set in the planting ground in relation to the hinge point of the cylinder 10 which hinges in such backward direction freely around its suspension hinge point so that it follows the movement of the planting hole 13 in relation to the frame 14. When the planting hole 13 has been made, the cylinder 10 lifts the punch 11 and the cylinder 10 is pushed back by means of a damped spring system 15, as a result of which the cylinder is swung around its suspension hinge point up to against a stop 16, and settles in the starting position for a following cycle and the third stage of the planting cycle is ended. As a result, the longitudinal position of the planting hole 13 in relation to the planting ground 12 is determined exclusively by the moment at which the punch 11 is moved into the planting ground. In order to limit the variations of the depths of the consecutive planting holes 13 as a result of the vertical movements of the frame 14 caused by evenenesses in the field as much as possible, at least one support of the frame 14 is placed on the hinge point 17 between the wheels 18 of a wheel set 19 which will cause this wheel set 19 to function as a boogie and which will considerably reduce the vertical movements of the support of the frame 14 caused by unevenesses in the travel track. While the second stage advances and the third stage expires, one container 8 fitted with a closing device 9 passes above the transport mechanism 20 which will carry out the fourth stage of in the planting cycle. Each of the above closing devices 9 is hingedly positioned under its respective container 8 in a horizontal surface, so that it can swing away under its container 8, and it is also forced by a spring 21 into this turned away position. The rotating cascade 7 with containers 8 and closing devices 9 is enclosed near the closing devices 9 by a stationary ring 22, which forces the closing devices 9 under their respective containers 8 against the resilience of the aforesaid spring 21. This ring is opened out at the position where the containers 8 pass above the vertical transport mechanism 20, as a result of which each time one closing device 9 is turned outwards by its respective spring 21 under the container 8 and the bottom of the container 8 concerned is opened. As a result of the movement of the closing device 9, the bottom side of the cutting 1 which rests on the closing device 9 in the swing direction of the closing device 9, is pushed against the side wall of the container concerned 8, as a result of which in this stage of its respective planting cycle each cutting 1 leaves in freefall from an identical spatial position in relation to the whole planting device. Each time a container 8 is opened, a fourth stage of the whole planting cycle is started, whereby the cutting 1 is caught and transported downwards by the vertical transport mechanism 20 which is hingedly hung up in the vertical surface of the direction of movement, after as small a freefall as possible. This downward movement is combined with a swinging movement of the whole hingedly hung up transport mechanism 20. This swing movement is taken care of by a central driving shaft 23 fitted with an eccentric 24 for each transport mechanism 20, of which the eccentric movement is transmitted by means of a connecting rod 25 to the respective hingedly hung up vertical transport mechanism 20. The eccentric 24 and the hinge points of the transport mechanism 20 and the connecting rod 25 are positioned in such a way that the backward movement of transport mechanism 20 makes its axis point to one fixed point on the planting ground 12 during the whole movement that is necessary to transport the cutting 1 up to into the planting hole 13 and to cause the cutting to leave the transport mechanism 20 completely to complete the fourth stage of the planting cycle and the planting cycle in its totality. While the central axle 23 keeps on turning, the vertical transport mechanism 20 returns to its starting position, ready for the next cycle. a number of planers mounted before the punch, planing the planting ground at an equal height just before the planting hole is made. In order to obtain as identical a depth of the planting holes as possible, before each of the punches there is a planer 12 to plane the planting ground 12 at an equal height before the planting hole is made.

In this described but not limitative application of the continuous feed-through cutting planting machine, all branched movements have been reduced to a minimum, and only one movement in relation to the planting ground to be tilled is determined by the mechanisms fitted for such purpose. The transfer of the cuttings from their supply position to the containers concerned requires a minimum effort from the operator. Because of the continuous movement of the cascade with containers in which the cuttings have to be put, the level of difficulty and the necessary concentration requirements and skill of the operators are reduced to a minimum. Because of the freedom with which the cylinder with punch can move without being hindered, the synchronization mechanisms for the location of the planting hole become superfluous. As far as the continuous feed-through planting machine is concerned, this is determined by the moment at which the cylinder with punch is activated. The depth of the planting holes is kept constant by two mechanisms. On the one hand by placing the suspension of the planting device on swinging wheel sets, well-known as "boogies", whether or not fitted with a spring mechanism as a result of which the unevennesses in the travelling track have less influence on the vertical movement of the frame, and on the other hand a number of planers mounted before the punch, planing the planting ground at an equal height just before the planting hole is made.

According to a variant construction form of a continuous feed-through cutting planting machine, the cuttings are distributed mechanically from a supply magazine at an equal distance from each other on the buffer conveyor, partly leaning over the edge of the buffer conveyor, and are transported up to above an empty container of the cascade in a synchronized way, where the buffer conveyor, clamp conveyor or both conveyor belts end and the cutting is no longer clamped as a result of which the cutting falls into a container and rests on the closing device under the container. The transmission of the movement of the eccentrics placed on the drive shaft can be realized both by means of a connecting rod and by means of a follower. The cylinder can be both hydraulic and pneumatic. The closing devices can be forced under the containers into their desired positions both by means of springs and by means of cams. The preference regarding this construction possibilities mainly depends on local circumstances, the preference of the user and the availability of the components of the machine.

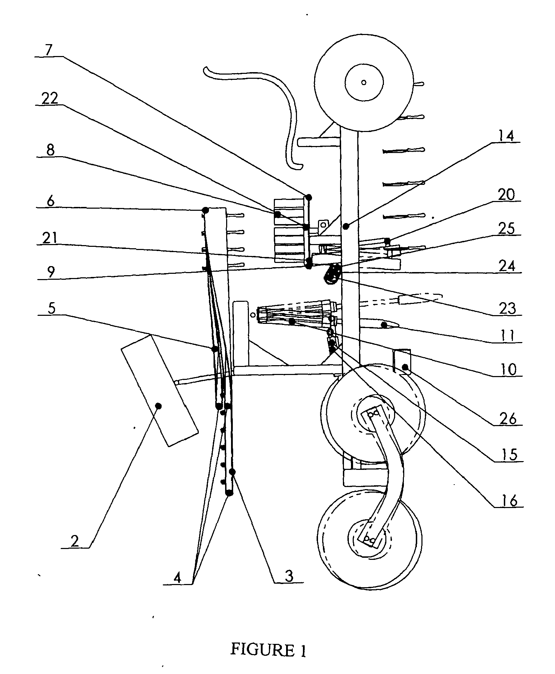

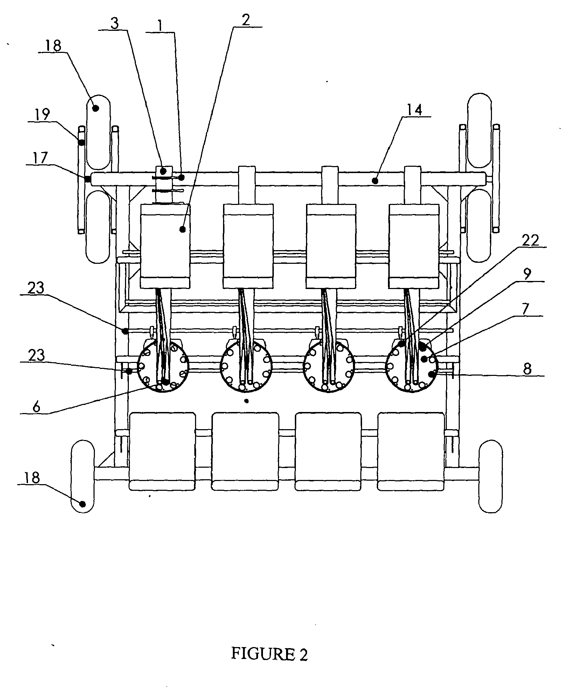

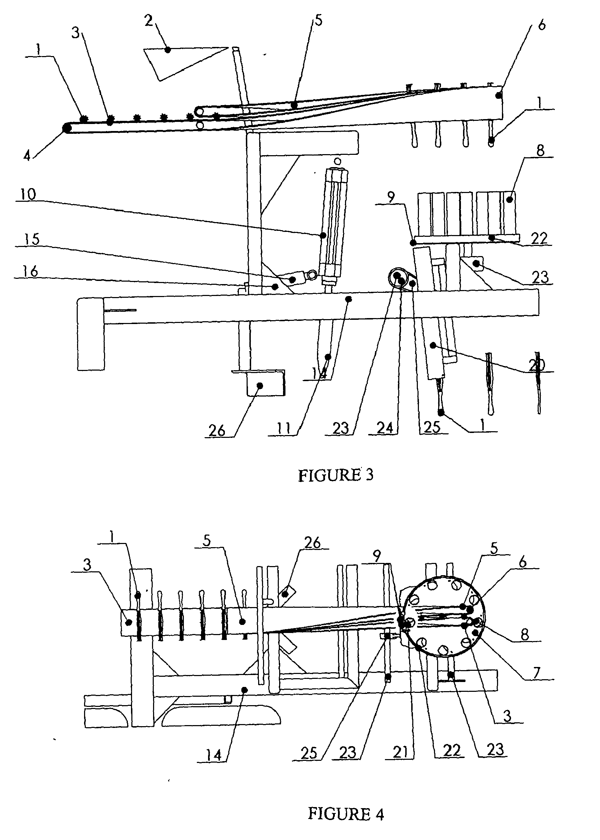

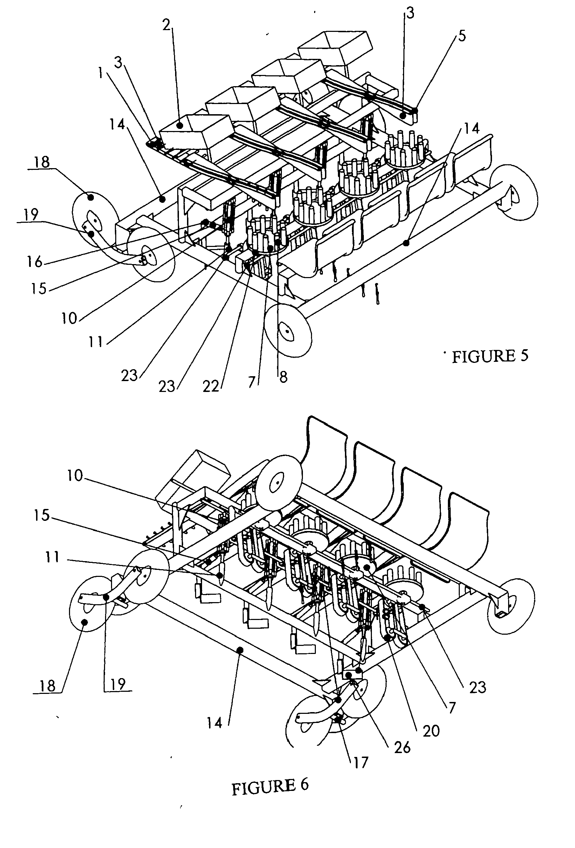

## Claims

1. Continuous feed-through cutting planting machine consisting of a frame on which all components are mounted, a supply magazine for the supply of the cuttings, a buffer conveyor by which the cuttings are transported to the operator, a number of vertically positioned containers in which the operator lowers the cuttings up to on the bottom of the container which is formed by a horizontally swivelling closing device, a number of vertical transport mechanisms by which the cuttings are transported from the cascade to the planting hole, and which is **characterized by** the fact that
1. the supply of cuttings through the buffer conveyors to the operator is kept under control by controlling the speed of the buffer conveyors.
2. Continuous feed-through cutting planting machine as set forth in conclusion 1, **characterized by** the fact that the falling movement of the cuttings is started by the swinging away of the closing device at the bottom side of the container in which the cutting is put.
3. Continuous feed-through cutting planting machine as set forth in conclusion 2, **characterized by** the fact that the swinging movement of the closing device on which the cutting rests, pushes the cutting against the side wall of the container.
4. Continuous feed-through cutting planting machine as set forth in conclusion 3, **characterized by** the fact that the falling movement of the cutting starts each time from an identical spatial position in relation to the planting device.
5. Continuous feed-through cutting planting machine as set forth in conclusion 4, **characterized by** the fact that the vertical transport mechanism for transporting the cuttings between cascade and planting hole is hingedly positioned.
6. Continuous feed-through cutting planting machine as set forth in conclusion 5, **characterized by** the fact that the hingedly positioned vertical transport mechanism keeps the transport movement of the cutting in the direction of the planting hole during the time that is necessary to lower the cutting into the planting hole and cause the cutting to leave the transport mechanism.
7. Continuous feed-through cutting planting machine as set forth in conclusion 1, **characterized by** the fact that the cylinders with punches for making the planting holes are hingedly positioned.
8. Continuous feed-through cutting planting machine as set forth in conclusion **characterized by** the fact that the hingedly positioned cylinders can swing away freely in the direction in which the planting ground moves under the planting device when the planting device moves on.
9. Continuous feed-through cutting planting machine as set forth in conclusion 8, **characterized by** the fact that the synchronization of the planting holes with regard to the vertical transport mechanisms is controlled by the moment at which the cylinders for making the planting holes are operated.
10. Continuous feed-through cutting planting machine as set forth in conclusion 9, **characterized by** the fact that the depth of the planting holes is kept constant by minimizing the vertical movement of the planting device caused by unevennesses in the travelling track by means of swinging wheel sets.
11. Continuous feed-through cutting planting machine as set forth in conclusion 10, **characterized by** the fact that the unevennesses in the planting ground are eliminated by placing an individual planer before each punch, which planer planes the planting ground at an equal height.
